Europäisches Patentamt

European Patent Office

Office européen des brevets

(19)

(11) **EP 1 431 623 B1**

(12) **FASCICULE DE BREVET EUROPEEN**

(45) Date de publication et mention
de la délivrance du brevet:
**05.07.2006 Bulletin 2006/27**

(51) Int Cl.:
***F16H 61/04*** *(2006.01)*    ***B60K 6/04*** *(2006.01)*

(21) Numéro de dépôt: **03300270.0**

(22) Date de dépôt: **18.12.2003**

(54) **Récupération d'énergie lors d'un changement de rapport montant sur un véhicule hybride série**

Energierückgewinnung während Hochschaltung eines seriellen Hybridfahrzeugs

Energy recovery during upshift in a series hybrid vehicle

(84) Etats contractants désignés:
**AT BE BG CH CY CZ DE DK EE ES FI FR GB GR
HU IE IT LI LU MC NL PT RO SE SI SK TR**

(30) Priorité: **20.12.2002 FR 0216307**

(43) Date de publication de la demande:
**23.06.2004 Bulletin 2004/26**

(73) Titulaire: **Peugeot Citroen Automobiles SA
78943 Vélizy-Villacoublay Cedex (FR)**

(72) Inventeurs:
• **de Wulf, Grégory
75006 Paris (FR)**
• **Prou, Jean-Michel
92250 La Garenne Colombes (FR)**

(74) Mandataire: **de Beaumont, Michel
1bis, rue Champollion
38000 Grenoble (FR)**

(56) Documents cités:
**US-A- 5 944 630**

EP 1 431 623 B1

**Description**

La présente invention propose un procédé et un dispositif de récupération d'énergie lors du passage d'un rapport de réduction initial d'une boîte de vitesses d'un véhicule hybride série à un rapport de réduction final inférieur au rapport initial.

Un véhicule hybride série comporte un moteur thermique couplé en série avec une machine électrique, le moteur thermique et la machine électrique pouvant fournir chacun un couple participant à l'entraînement des roues du véhicule.

La machine électrique assiste le moteur thermique dans ses différentes phases de fonctionnement et permet globalement de diminuer la consommation en carburant du moteur thermique. En particulier, dans certaines phases de fonctionnement du véhicule, la machine électrique peut fonctionner comme un alternateur entraîné par le moteur thermique pour charger une batterie. Le préambule des revendications 1 et 9 est définit par US-A-5 944 630.

De façon générale, l'arbre du moteur thermique entraîne un arbre d'entrée d'une boîte de vitesses par l'intermédiaire d'un embrayage. La boîte de vitesses permet de choisir différents rapports de réduction de la vitesse de angulaire de l'arbre moteur, ou régime moteur. De plus, l'arbre moteur est généralement désolidarisé de l'arbre d'entrée de la boîte de vitesses au moyen de l'embrayage pendant un changement de rapport.

Dans le cas d'une boîte de vitesses manuelle, pendant un changement de rapport, le conducteur maintient la pédale d'embrayage enfoncée, pour désolidariser l'arbre moteur de l'arbre d'entrée de la boîte de vitesses, et relâche simultanément la pédale d'accélération ce qui fait chuter la vitesse angulaire du moteur thermique vers le ralenti. Lorsque le nouveau rapport de la boîte de vitesses est enclenché, le conducteur relâche partiellement la pédale d'embrayage. Le couple fourni par l'arbre d'entrée de la boîte de vitesses n'est alors que partiellement transmis par l'embrayage à l'arbre moteur. Simultanément, le conducteur appuie sur la pédale d'accélération pour augmenter la vitesse angulaire de l'arbre moteur jusqu'à le faire sensiblement coïncider avec la vitesse angulaire de l'arbre d'entrée de la boîte de vitesses. Ce n'est que lorsque les deux vitesses angulaires coïncident que le conducteur relâche complètement la pédale d'embrayage. Une telle manoeuvre répétée pour chaque changement de rapport demande de la part du conducteur un effort de concentration non négligeable.

Tant que le moteur thermique n'est pas relié à la boîte de vitesses, l'énergie qu'il fournit est inutilisée. De plus, dans le cas où le rapport de réduction final de la boîte de vitesses est inférieur au rapport de réduction initial, c'est-à-dire dans le cas d'un changement de rapport montant, la vitesse angulaire de l'arbre moteur doit diminuer. L'alimentation en carburant du moteur thermique est donc généralement interrompue pendant le changement de rapport et la vitesse angulaire de l'arbre moteur diminue par le seul couple résistif du moteur thermique. Le moteur thermique fournit donc de l'énergie sans consommation de carburant.

Dans le cas d'un véhicule hybride série, il est possible d'utiliser l'énergie "gratuite" fournie par le moteur thermique non alimenté pendant un changement de rapport montant pour entraîner la machine électrique. La machine électrique fonctionne alors comme un alternateur et peut charger une batterie du véhicule. Un tel procédé est appelé procédé de récupération d'énergie pendant un changement de rapport montant.

La présente invention propose un procédé original de commande d'une machine électrique d'un véhicule hybride série permettant une récupération d'énergie lors d'un changement de rapport montant.

La présente invention vise également un procédé de commande du couple fourni par la machine électrique lors d'un changement de rapport montant permettant d'améliorer l'agrément de conduite du conducteur du véhicule.

Pour atteindre ces objets, la présente invention prévoit un procédé de récupération d'énergie pour véhicule hybride série lors d'un changement de rapport d'une boîte de vitesses d'un rapport de réduction initial à un rapport de réduction final inférieur au rapport initial, l'arbre d'entrée de la boîte de vitesses étant entraîné par un arbre moteur d'un moteur thermique lorsqu'un rapport de réduction est engagé et étant désolidarisé dudit arbre moteur pendant le changement de rapport, une machine électrique étant couplée sur l'arbre moteur et fournissant un couple d'assistance audit arbre moteur, consistant à vérifier que des conditions de validation sont remplies ; déterminer une vitesse angulaire finale théorique de l'arbre moteur en fonction de la vitesse angulaire initiale de l'arbre moteur précédant le changement de rapport et du rapport de réduction final ; déterminer une durée théorique de changement de rapport en fonction de la vitesse angulaire finale théorique et de la vitesse angulaire initiale ; commander la machine électrique pour appliquer sur l'arbre moteur un premier couple d'assistance de freinage pendant une durée déterminée dépendant de la durée théorique, de la vitesse angulaire finale théorique et de la vitesse angulaire initiale ; et commander la machine électrique pour appliquer sur l'arbre moteur un second couple d'assistance différent du premier couple d'assistance jusqu'à l'achèvement de la durée théorique.

Selon un mode de réalisation de l'invention, le premier couple d'assistance de freinage correspond à la puissance maximale pouvant être reçue par la machine électrique.

Selon un mode de réalisation de l'invention, le second couple d'assistance est nul.

Selon un mode de réalisation de l'invention, le second couple d'assistance est égal à un couple positif d'entraînement de l'arbre moteur correspondant à la puissance maximale pouvant être fournie par la machine électrique.

Selon un mode de réalisation de l'invention, une des conditions de validation est que la vitesse angulaire de l'arbre moteur est supérieure à un seuil déterminé.

Selon un mode de réalisation de l'invention, ledit seuil est différent selon que la vitesse angulaire de l'arbre moteur est croissante ou décroissante.

Selon un mode de réalisation de l'invention, une des conditions de validation est que l'accélération du véhicule est supérieure à une accélération déterminée.

Selon un mode de réalisation de l'invention, une des conditions de validation est que l'alimentation en carburant du moteur thermique est arrêtée.

L'invention prévoit également un dispositif de commande d'une machine électrique équipant un véhicule hybride série comprenant un moteur thermique entraînant un arbre moteur relié à un arbre d'entrée d'une boîte de vitesses et un embrayage adapté à désolidariser ledit arbre moteur dudit arbre d'entrée lors d'un changement de rapport de la boîte de vitesses d'un rapport de réduction initial à un rapport de réduction final, ladite machine électrique étant couplée sur l'arbre moteur et fournissant un couple d'assistance audit arbre moteur, comportant des moyens pour déterminer le début d'un passage du rapport initial à un rapport final inférieur au rapport initial, des moyens pour déterminer une vitesse angulaire finale théorique de l'arbre moteur en fonction de la vitesse angulaire initiale de l'arbre moteur avant le changement de rapport et du rapport de réduction final, des moyens pour déterminer une durée théorique de changement de rapport en fonction de la vitesse angulaire finale théorique et de la vitesse angulaire initiale, et des moyens pour fournir successivement à la machine électrique une première consigne de couple d'assistance de freinage pendant une durée déterminée dépendant de la durée théorique, de la vitesse angulaire finale théorique et de la vitesse angulaire initiale, et une seconde consigne de couple d'assistance jusqu'à l'achèvement de la durée théorique.

Cet objet, ces caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente, de façon schématique, un exemple d'architecture d'un véhicule hybride série selon l'invention ;
la figure 2 représente des exemples d'évolution de l'accélération angulaire de l'arbre moteur en fonction de la vitesse angulaire de l'arbre moteur pour différents couples d'assistance de la machine électrique ;
la figure 3 représente l'évolution de la vitesse angulaire de l'arbre moteur en fonction du temps pour différents couples d'assistance de la machine électrique ; et
la figure 4 représente l'évolution de la durée théorique de changement de rapport en fonction de la vitesse angulaire initiale de l'arbre moteur pour différents changements de rapport.

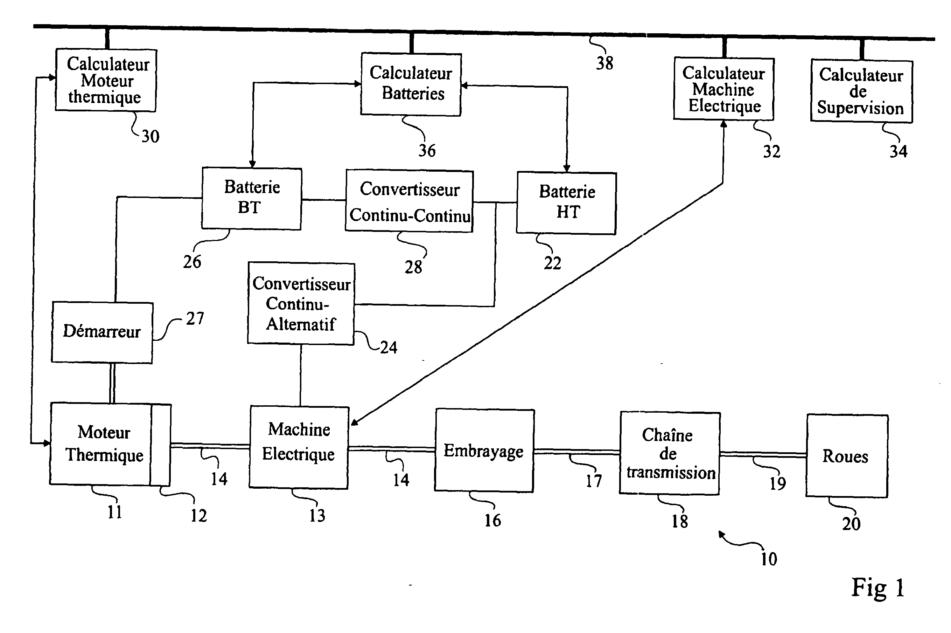

Comme cela est représenté sur la figure 1, le véhicule hybride 10 comprend un moteur thermique 11 associé à un volant moteur 12. Une machine électrique 13 est couplée sur l'arbre moteur 14 du moteur thermique 11. L'arbre moteur 14 est relié à un embrayage 16 qui, lorsqu'il est actionné, couple l'arbre moteur 14 à un arbre d'entrée 17 d'une chaîne de transmission 18. La chaîne de transmission 18 comprend, par exemple, une boîte de vitesses et un pont diviseur. La vitesse de rotation de l'arbre de sortie 19 de la chaîne de transmission 18 correspond à la vitesse de rotation de l'arbre d'entrée 17 multipliée par le rapport de réduction global de la chaîne de transmission 18. L'arbre de sortie 19 entraîne les roues 20 du véhicule. La boîte de vitesses peut être une boîte de vitesses manuelle, ou boîte manuelle pilotée. Une boîte de vitesses manuelle pilotée est une boîte de vitesses pour laquelle le conducteur sélectionne un changement de rapport, par exemple au moyen d'un bouton de commande, le changement de vitesses étant alors réalisé automatiquement. La boîte de vitesses peut être une boîte de vitesses automatique. L'embrayage 16 peut, selon le type de boîte de vitesses, être automatique ou actionné par le conducteur.

La machine électrique 13 est reliée à une batterie haute tension ou de puissance 22 par l'intermédiaire d'un convertisseur continu-alternatif 24. La machine électrique 13 peut fonctionner comme un alternateur entraîné par le moteur thermique 11 et charger la batterie haute tension 22, ou bien fonctionner comme un moteur électrique alimenté par la batterie haute tension 22 et entraîner l'arbre moteur 14.

La batterie haute tension 22 est reliée à une batterie basse tension 26 par l'intermédiaire d'un convertisseur continu-continu 28. La batterie basse tension 26 alimente un réseau de bord à basse tension (non représenté) pour l'alimentation d'équipements classiques du véhicule 10 (par exemple des moyens de climatisation, des moyens d'essuyage, etc.). La batterie basse tension 26 peut alimenter également un démarreur classique 27 pouvant entraîner l'arbre moteur 14. La batterie haute tension 22 peut participer à l'alimentation du réseau de bord et alimenter un réseau de bord haute tension pour des équipements spécifiques du véhicule qui demandent une puissance élevée, comme par exemple des résistances de chauffage, une direction assistée, etc. A titre d'exemple, la batterie basse tension 26 a une tension moyenne de 12 volts et la batterie haute tension 22 est une batterie de puissance de type NimH (Nickel-métal-Hydrure) ayant une tension moyenne de 42 volts.

Le véhicule hybride 10 comporte plusieurs calculateurs 30, 32, 34, 36 qui commandent les différents éléments du véhicule hybride 10. Les calculateurs 30, 32, 34, 36 peuvent échanger entre eux des données par l'intermédiaire d'un bus d'échange de données 38. Un calculateur 30 de contrôle du moteur thermique est adapté à commander par exemple l'injection de carburant dans les chambres de combustion du moteur thermique 11 à partir de paramètres de fonctionnement du moteur thermique 11. Un calculateur 32 de contrôle de la machine électrique 13 est adapté à transmettre à la machine électrique 13 une commande de couple à partir de paramètres de fonctionnement de la machine électrique 13 et d'une consigne fournie par un calculateur 34 de supervision. Le calculateur 34 de supervision peut également émettre, sur le bus de données 38, un signal d'alarme lorsqu'il détecte un dysfonctionnement de la machine électrique 13, du convertisseur continu-alternatif 24 ou du convertisseur continu-continu 28. Le calculateur 34 de supervision peut également commander les calculateurs 30, 32, 36 dans le but d'assurer des prestations particulières. Un calculateur 36 de contrôle des batteries 22, 26 est adapté, à partir de paramètres de fonctionnement des batteries haute tension 22 et basse tension 26, à, entre autres, émettre, sur le bus de données 38, un signal d'alarme lorsque certaines conditions de bon fonctionnement des batteries 22, 26 ne sont pas remplies.

Les différents signaux utilisés par les calculateurs 30, 32, 34, 36 peuvent être fournis directement par des capteurs, non représentés, équipant le véhicule hybride 10 ou être estimés par les calculateurs 30, 32, 34, 36. Chaque capteur peut être relié directement à l'un des calculateurs 30, 32, 34, 36, et/ou à un autre calculateur du véhicule 10, non représenté, lui-même relié au bus de données 38 ou à l'un des calculateurs 30, 32, 34, 36.

Lors du fonctionnement normal du véhicule hybride 10, le moteur thermique 11 fournit à l'arbre moteur 14 un couple d'entraînement $C_{MT}$ des roues 20 de façon à commander la vitesse angulaire $\omega_{MOT}$ de l'arbre moteur 14. La machine électrique 13 fournit un couple d'assistance $C_{ME}$ à l'arbre moteur 14. Alimentée par la batterie haute tension 22, la machine électrique 13 peut fournir un couple d'entraînement additionnel pour assister le moteur thermique 11, ou fournir un couple résistif, qui s'oppose au couple d'entraînement, dans le but de produire de l'énergie électrique pour charger la batterie haute tension 22, ou la batterie basse tension 26, par l'intermédiaire du convertisseur continu-continu 28. Selon les conditions de fonctionnement du véhicule, le calculateur 34 de supervision fixe le couple à fournir par le moteur thermique 11 et le couple à fournir par la machine électrique 13 en transmettant des signaux de commande adaptés au calculateur moteur thermique 30, et au calculateur machine électrique 32, par l'intermédiaire du bus de données 38.

Le véhicule hybride 10 selon l'invention propose une prestation particulière consistant à récupérer une partie de l'énergie fournie par le moteur thermique 11 lors d'un changement de rapport montant. Une telle prestation peut éventuellement être activée ou inhibée au moyen d'un bouton de sélection, présent par exemple sur le tableau de bord du véhicule, et qui peut être actionné par le conducteur.

Dans le cas où la prestation de récupération d'énergie est activée, le calculateur 34 de supervision vérifie si des conditions de validation sont remplies.

Les conditions de validation suivantes visent plus précisément à détecter qu'un changement de rapport montant est engagé par le conducteur, par exemple au moyen du levier de commande de la boîte de vitesses manuelle ou du bouton de commande de la boîte de vitesses manuelle pilotée :

- l'accélération du véhicule est supérieure à un seuil déterminé. En effet, juste avant d'effectuer un changement de rapport montant, le véhicule est généralement dans une phase d'accélération qui justifie le changement de rapport ;
- l'arbre moteur 14 est désolidarisé de l'arbre d'entrée 17 de la chaîne de transmission 18 ; et
- l'alimentation du moteur thermique 11 est interrompue.

Les conditions de validation suivantes visent plus précisément à vérifier que le fonctionnement du véhicule permet la mise en oeuvre d'une récupération d'énergie :

- la vitesse angulaire $\omega_{MOT}$ de l'arbre moteur 14 est supérieure à un seuil. La détermination du seuil est détaillée par la suite ;
- le rapport de réduction initial de la boîte de vitesses est supérieur au rapport de réduction minimum disponible de la boîte de vitesses, ce qui implique qu'un changement de rapport montant peut être réalisé ; et
- le rapport de la marche arrière du véhicule n'est pas engagé.

Les conditions suivantes visent plus précisément à vérifier la disponibilité des différents éléments du véhicule qui participent à la fourniture d'énergie électrique :

- les calculateurs du véhicule indiquent l'absence de dysfonctionnement de la machine électrique 13, du convertisseur continu alternatif 24, du convertisseur continu-continu 24, des batteries 22, 26, des capteurs, et, de façon générale, de l'ensemble des systèmes électriques du véhicule ; et
- les températures des systèmes électriques sont compatibles avec une charge de la batterie de puissance 22, celle-ci n'étant pas sollicitée par ailleurs.

Lors d'un changement de rapport, l'arbre moteur 14 est désolidarisé de l'arbre d'entrée 17 de la chaîne de transmission 18. L'accélération angulaire $\dot{\omega}_{MOT}$ de l'arbre moteur 14 est alors obtenue par la relation suivante :

$$(I_{vol} + \frac{I_{emb}}{2})\dot{\omega}_{MOT} = C_{MT} + C_{ME} \qquad (1)$$

où $I_{vol}$ représente l'inertie du moteur thermique 11 et $I_{emb}$ l'inertie de l'embrayage 16.

Pour un moteur thermique 11 non alimenté en carburant, le couple $C_{MT}$ fourni est résistif et sensiblement constant quelque soit la vitesse angulaire $\omega_{MOT}$ de l'arbre moteur 14. Pour un moteur Diesel, le couple résistif est par exemple d'environ -28 Nm. Le couple d'assistance $C_{ME}$ de la machine électrique 13 est sensiblement égal à :

$$C_{ME} = P_{ME}/\omega_{MOT} \qquad (2)$$

où $P_{ME}$ est la puissance reçue ou fournie par la machine électrique 13.

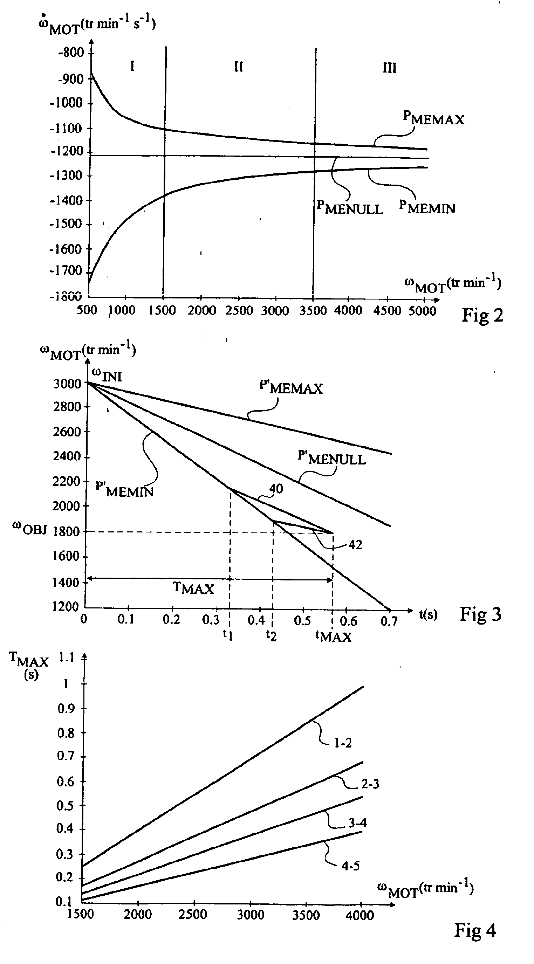

La figure 2 représente les courbes d'évolution de l'accélération angulaire $\dot{\omega}_{MOT}$ de l'arbre moteur 14 en fonction de la vitesse angulaire $\omega_{MOT}$ de l'arbre moteur 14 pour différentes valeurs du couple d'assistance $C_{ME}$ de la machine électrique 13.

La courbe $P_{MEMAX}$ représente l'accélération angulaire $\dot{\omega}_{MOT}$ de l'arbre moteur 14 pour un couple d'assistance positif maximum, c'est-à-dire qui tend à une augmentation de la vitesse angulaire $\omega_{MOT}$ de l'arbre moteur 14, correspondant à une puissance maximale fournie par la machine électrique 13. La courbe $P_{MENULL}$ représente l'accélération angulaire de l'arbre moteur pour un couple d'assistance nul. La courbe $P_{MEMIN}$ représente l'accélération angulaire de l'arbre moteur pour un couple d'assistance minimum, c'est-à-dire pour un couple résistif maximum de même signe que le couple résistif $C_{MT}$ du moteur thermique 11, correspondant à une puissance maximale reçue par la machine électrique 13.

Trois zones I, II, III peuvent être délimitées en figure 2 :

- la zone I correspond à des vitesses angulaires $\omega_{MOT}$ de l'arbre moteur variant par exemple de 500 à 1500 tr.min$^{-1}$ environ. Le couple résistif fourni par la machine électrique 13 peut être relativement élevé et pourrait, aux faibles vitesses angulaires, faire caler le moteur thermique 11, ce qui nuirait considérablement à l'agrément de conduite. En outre, à de telles vitesses de rotation, l'alimentation du moteur thermique 11 en carburant n'est généralement pas complètement interrompue de façon à réguler correctement la vitesse de rotation de l'arbre moteur 14 autour d'une consigne de ralenti. Il est donc peu intéressant d'un point de vue énergétique d'effectuer une récupération d'énergie dans une telle zone. La fonction de récupération d'énergie est donc inhibée pour des vitesses angulaires $\omega_{MOT}$ de l'arbre moteur 14 inférieures à 1500 tr.min$^{-1}$, ce qui correspond à $|C_{ME}| \leq$ (à_préciser)$|C_{MT}|$ ;
- la zone II correspond aux vitesses angulaires de l'arbre moteur 14 variant d'environ 1500 à 3500 tr.min$^{-1}$. Dans cette zone, l'alimentation en carburant du moteur thermique 11 est systématiquement interrompue pendant un changement de rapport. La machine électrique 13 peut donc prélever de l'énergie et assurer la recharge "gratuite" de la batterie de puissance 22. De plus, dans cette zone, les couples résistifs développés par la machine électrique 13 sont encore suffisants pour avoir une incidence sur la chute de la vitesse de rotation $\omega_{MOT}$ de l'arbre moteur 14 lors d'un changement de rapport. La machine électrique 13 peut donc activement participer au contrôle de la vitesse angulaire $\omega_{MOT}$ de l'arbre moteur 14 pour améliorer l'agrément de conduite ; et
- la zone III correspond à des vitesses angulaires $\omega_{MOT}$ de l'arbre moteur supérieures à 3500 tr.min$^{-1}$. Dans cette zone, les couples résistifs développés par la machine électrique 13 sont peu significatifs pour faire évoluer la vitesse angulaire $\omega_{MOT}$ de l'arbre moteur 14. La prestation de récupération d'énergie ne peut donc pas participer de façon significative à l'agrément de conduite. En revanche, d'un point de vue énergétique, la machine électrique 13 peut continuer à prélever de l'énergie et à assurer la recharge de la batterie de puissance 22 de la même manière que dans la zone II.

Le seuil de vitesse angulaire séparant les zones I et II dépend essentiellement des caractéristiques du moteur thermique 11. Il peut être défini par une hystérésis et donc être différent selon que la vitesse angulaire de l'arbre moteur est croissante ou décroissante.

En intégrant l'équation (1), l'évolution de la vitesse angulaire $\omega_{MOT}$ de l'arbre moteur 14 pendant un changement de rapport s'exprime selon l'équation suivante :

$$-(I_{vol} + \frac{I_{emb}}{2})\frac{\omega_{mot}}{C_{MT}} + (I_{vol} + \frac{I_{emb}}{2})\frac{P_{ME}\ln(C_{MT}\omega_{mot} + P_{ME})}{C_{MT}^2} + t = \text{constante} \quad (3)$$

Il est important de noter que l'énergie récupérée lors d'un unique changement de rapport est faible étant donné la courte durée du changement de rapport. En effet, en considérant que la machine électrique 13 peut prélever au maximum une puissance de 4 kW, et sachant que la durée moyenne d'un changement de rapport montant est de l'ordre de 0,5 s, dans le meilleur cas, la machine électrique 13 ne peut récupérer que 2 kJ. Ceci correspond à environ 0,1% de l'état de charge pour une batterie de puissance 22 dont les caractéristiques à pleine charge sont de 2300 kJ et de 9 kW. Toutefois, les changements de rapport montant étant de façon générale nombreux lors de la conduite d'un véhicule sur un parcours classique, le gain énergétique total peut être conséquent. Par exemple, pour 30 changements de rapport montant, ce qui correspond au nombre moyen de rapports sur un parcours classique utilisé pour l'homologation de véhicules, on peut obtenir environ 3% de charge supplémentaire pour la batterie de puissance 22.

Le procédé selon l'invention consiste à partir d'une vitesse angulaire initiale $\omega_{INI}$ connue de l'arbre moteur 14, de parvenir à une vitesse angulaire finale $\omega_{OBJ}$ de l'arbre moteur 14 en une durée $T_{MAX}$, tout en rendant maximale l'énergie récupérée par la machine électrique 13. La durée $T_{MAX}$ correspond à la durée théorique du changement de rapport à l'achèvement de laquelle l'arbre moteur 14 et l'arbre d'entrée 17 de la chaîne de transmission 18 sont à nouveau solidarisés. La vitesse angulaire finale $\omega_{OBJ}$ de l'arbre moteur 14 correspond à la vitesse angulaire de synchronisation optimale, c'est-à-dire à la vitesse angulaire permettant d'assurer une solidarisation de l'arbre moteur 14 avec l'arbre d'entrée 17 de la chaîne de transmission 18 dans des conditions optimales à l'achèvement de la durée $T_{MAX}$. La vitesse angulaire finale $\omega_{OBJ}$ dépend de la vitesse angulaire initiale $\omega_{INI}$ de l'arbre moteur 14, du changement de rapport effectué et de paramètres tels que l'accélération du véhicule. Les valeurs possibles de la vitesse angulaire finale $\omega_{OBJ}$ sont stockées dans une zone mémoire de l'un des calculateurs du véhicule 10.

La commande de la vitesse angulaire de l'arbre moteur peut alors être définie par le système d'équations suivant :

$$\begin{cases} \min(\int_0^{T_{MAX}} P_{ME}dt) \quad \text{avec } P_{MEMIN} \leq P_{ME} \leq P_{MEMAX} \\ \omega(T_{MAX}) = \omega_{OBJ} \end{cases} \quad (4)$$

Pour une boîte de vitesses manuelle pilotée ou une boîte automatique, la durée d'un changement de rapport $T_{MAX}$ est connue à l'avance. Toutefois, pour une boîte de vitesses manuelle, la durée $T_{MAX}$ n'est pas connue pour un rapport et une vitesse angulaire initiale $\omega_{INI}$ donnés. En effet, le conducteur peut effectuer un changement de rapport selon des durées différentes pour un même rapport et une même vitesse angulaire initiale $\omega_{INI}$. La durée $T_{MAX}$ peut alors être déterminée comme cela est détaillé par la suite. Les valeurs possibles des durées $T_{MAX}$ sont stockées dans une zone mémoire de l'un des calculateurs du véhicule.

La figure 3 représente l'évolution de la vitesse angulaire $\omega_{MOT}$ de l'arbre moteur 14 en fonction du temps pour deux exemples de réalisation du procédé de commande de la machine électrique 13 selon l'invention. La vitesse angulaire initiale $\omega_{INI}$ est, à titre d'exemple, fixée à 3000 tr.min$^{-1}$. La vitesse angulaire finale $\omega_{OBJ}$ est fixée à 1800 tr.min$^{-1}$. Pour le rapport montant considéré, la cartographie indique que la durée $T_{MAX}$ est de 0,57 s. La courbe P'$_{MEMAX}$ indique l'évolution de la vitesse angulaire $\omega_{MOT}$ de l'arbre moteur 14 quand la machine électrique 13 fournit un couple d'assistance positif correspondant à une puissance fournie maximale. La courbe P'$_{MENULL}$ indique l'évolution de la vitesse angulaire $\omega_{MOT}$ de l'arbre moteur 14 lorsque la machine électrique 13 ne fournit pas de couple d'assistance. La courbe P'$_{MEMIN}$ représente l'évolution de la vitesse angulaire $\omega_{MOT}$ de l'arbre moteur 14 lorsque la machine électrique 13 fournit un couple résistif correspondant à une puissance reçue maximale.

Selon un premier exemple de réalisation, jusqu'à l'instant $t_1$, la machine électrique 13 est commandée pour fournir un couple d'assistance négatif correspondant à une puissance reçue maximale, ce qui entraîne une forte chute de la vitesse angulaire $\omega_{MOT}$ de l'arbre moteur 14. La vitesse angulaire $\omega_{MOT}$ suit donc une portion de la courbe P'$_{MEMIN}$. Puis, de l'instant $t_1$ à l'instant $t_{MAX}$, la machine électrique 13 ne fournit plus de couple d'assistance. La vitesse angulaire $\omega_{MOT}$ chute alors plus doucement jusqu'à la vitesse angulaire finale $\omega_{OBJ}$ sur une portion de courbe 40 parallèle à la courbe P'$_{MENULL}$.

Selon un second exemple de réalisation de l'invention, jusqu'à l'instant $t_2$, la machine électrique 13 fournit un couple d'assistance résistif correspondant à une puissance reçue maximale. La vitesse angulaire $\omega_{MOT}$ de l'arbre moteur 14 suit donc une portion de la courbe P'$_{MEMIN}$. Ensuite, jusqu'à l'instant $t_{MAX}$, la machine électrique 13 fournit un couple d'assistance positif correspondant à une puissance fournie maximale. La vitesse angulaire $\omega_{MOT}$ chute alors très faiblement jusqu'à la vitesse angulaire finale $\omega_{OBJ}$ selon une portion de courbe 42 parallèle à la courbe P'$_{MEMAX}$.

Le second exemple de réalisation correspond à la commande optimale pouvant être appliquée à la machine électrique 13 pour obtenir une récupération d'énergie optimale. Toutefois, cela suppose qu'entre les instants $t_2$ et $T_{MAX}$ la machine électrique 13 applique un couple positif sur l'arbre moteur 14. Ceci peut impliquer des contraintes de fonctionnement importantes afin de répondre aux exigences de sécurité de fonctionnement de la machine électrique 18.

Le premier exemple de réalisation du procédé selon l'invention correspond à une commande de la machine électrique 13 qui n'est pas tout à fait optimale en terme de récupération d'énergie mais qui demeure tout à fait satisfaisante. En outre, la machine électrique 13 ne fournissant pas de couple positif, le premier exemple de réalisation du procédé de commande est plus robuste que le second exemple de réalisation en termes de sécurité de fonctionnement et peut être mis en oeuvre très simplement.

Pour les deux exemples de réalisation, les instants $t_1$ et $t_2$ peuvent être prédéterminés et stockés en mémoire et dépendre de la vitesse angulaire initiale $\omega_{INI}$ et de la durée $T_{MAX}$.

La durée $T_{MAX}$ est le paramètre de calibration le plus important de la présente régulation. La variation de $T_{MAX}$ est fortement liée aux vitesses angulaires $\omega_{INI}$ et $\omega_{OBJ}$. Pour simplifier le calcul de la durée $T_{MAX}$, on peut supposer que le couple $C_{ME}$ fourni par la machine électrique 13 est linéaire en fonction de la vitesse angulaire de l'arbre moteur 14 et suit une loi du type :

$$C_{ME} = K_1 \omega_{MOT} + K_2 \qquad (5)$$

où les coefficients $K_1$ et $K_2$ sont obtenus par approximation linéaire.

On obtient l'expression :

$$T_{MAX} = \frac{(I_{vol} + \dfrac{I_{emb}}{2})\ln(\dfrac{\omega_{OBJ}K_1 + C_{MT} + K_2}{C_{MT} + K_2 + \omega_{INI}K_1})}{K_1} \qquad (6)$$

La figure 4 représente des exemples d'évolution de la durée $T_{MAX}$ en fonction de la vitesse angulaire initiale $\omega_{INI}$ de l'arbre moteur 14 pour différents changements de rapport. Les courbes 1-2, 2-3, 3-4 et 4-5 représentent respectivement les changements de rapport entre les premier et deuxième, deuxième et troisième, troisième et quatrième, et quatrième et cinquième rapports de la boîte de vitesses.

Dans le cas où la boîte de vitesses est une boîte de vitesses pilotée ou une boîte automatique, un contrôle optimal peut être obtenu puisque l'embrayage est piloté de façon automatique.

Selon une variante de la présente invention, l'utilisation d'une machine électrique plus puissante peut permettre un suivi parfait de la décélération du régime moteur.

Bien entendu, la présente invention est susceptible de diverses variantes et modifications qui apparaîtront à l'homme de l'art. En particulier, les différents calculateurs pourraient être regroupés en un unique calculateur.

**Revendications**

**1.** Procédé de récupération d'énergie pour véhicule hybride série (10) lors d'un changement de rapport d'une boîte de vitesses d'un rapport de réduction initial à un rapport de réduction final inférieur au rapport initial, l'arbre d'entrée (17) de la boîte de vitesses étant entraîné par un arbre moteur (14) d'un moteur thermique (11) lorsqu'un rapport de réduction est engagé et étant désolidarisé dudit arbre moteur pendant le changement de rapport, une machine électrique (13) étant couplée sur l'arbre moteur et fournissant un couple d'assistance ($C_{ME}$) audit arbre moteur, **caractérisé en ce qu'**il comporte les étapes suivantes :

vérifier que des conditions de validation sont remplies ;
déterminer une vitesse angulaire finale théorique ($\omega_{OBJ}$) de l'arbre moteur en fonction de la vitesse angulaire initiale ($\omega_{INI}$) de l'arbre moteur précédant le changement de rapport et du rapport de réduction final ;
déterminer une durée théorique ($T_{MAX}$) de changement de rapport en fonction de la vitesse angulaire finale théorique et de la vitesse angulaire initiale ;
commander la machine électrique pour appliquer sur l'arbre moteur un premier couple d'assistance de freinage pendant une durée déterminée dépendant de la durée théorique, de la vitesse angulaire finale théorique et de la vitesse angulaire initiale ; et

commander la machine électrique pour appliquer sur l'arbre moteur un second couple d'assistance différent du premier couple d'assistance jusqu'à l'achèvement de la durée théorique.

2. Procédé selon la revendication 1, dans lequel le premier couple d'assistance de freinage correspond à la puissance maximale pouvant être reçue par la machine électrique (13).

3. Procédé selon la revendication 1, dans lequel le second couple d'assistance est nul.

4. Procédé selon la revendication 1, dans lequel le second couple d'assistance est égal à un couple positif d'entraînement de l'arbre moteur (14) correspondant à la puissance maximale pouvant être fournie par la machine électrique (13).

5. Procédé selon la revendication 1, dans lequel une des conditions de validation est que la vitesse angulaire ($\omega_{MOT}$) de l'arbre moteur (14) est supérieure à un seuil déterminé.

6. Procédé selon la revendication 5, dans lequel ledit seuil est différent selon que la vitesse angulaire ($\omega_{MOT}$) de l'arbre moteur (14) est croissante ou décroissante.

7. Procédé selon la revendication 1, dans lequel une des conditions de validation est que l'accélération du véhicule (10) est supérieure à une accélération déterminée.

8. Procédé selon la revendication 1, dans lequel une des conditions de validation est que l'alimentation en carburant du moteur thermique (11) est arrêtée.

9. Dispositif de commande d'une machine électrique (13) équipant un véhicule hybride série (10) comprenant un moteur thermique (11) entraînant un arbre moteur (14) relié à un arbre d'entrée (17) d'une boîte de vitesses et un embrayage (16) adapté à désolidariser ledit arbre moteur (14) dudit arbre d'entrée (17) lors d'un changement de rapport de la boîte de vitesses d'un rapport de réduction initial à un rapport de réduction final, ladite machine électrique étant couplée sur l'arbre moteur et fournissant un couple d'assistance ($C_{ME}$) audit arbre moteur, **caractérisé en ce qu'**il comporte des moyens pour déterminer le début d'un passage du rapport initial à un rapport final inférieur au rapport initial, des moyens pour déterminer une vitesse angulaire finale théorique ($\omega_{OBJ}$) de l'arbre moteur (14) en fonction de la vitesse angulaire initiale ($\omega_{INI}$) de l'arbre moteur (14) avant le changement de rapport et du rapport de réduction final, des moyens pour déterminer une durée théorique ($T_{MAX}$) de changement de rapport en fonction de la vitesse angulaire finale théorique et de la vitesse angulaire initiale, et des moyens pour fournir successivement à la machine électrique une première consigne de couple d'assistance de freinage pendant une durée déterminée dépendant de la durée théorique, de la vitesse angulaire finale théorique et de la vitesse angulaire initiale, et une seconde consigne de couple d'assistance jusqu'à l'achèvement de la durée théorique.

**Claims**

1. An energy recovery method for a series hybrid vehicle (10) in a shifting of a gearbox from an initial reduction ratio to a final reduction ratio lower than the initial ratio, the input shaft (17) of the gearbox being driven by a driving shaft (14) of a heat engine (11) when a reduction ratio is engaged and being disconnected from said driving shaft during the shifting, an electric machine (13) being coupled on the driving shaft and providing an assistance torque ($C_{ME}$) to said driving shaft, **characterized in that** it comprises the steps of:

checking that validation conditions are fulfilled;
determining a theoretical final angular speed ($\omega_{OBJ}$) of the driving shaft according to the initial angular speed of the driving shaft ($\omega_{INI}$) preceding the shifting and to the final reduction ratio;
determining a theoretical shifting duration ($T_{MAX}$) according to the theoretical final angular speed and to the initial angular speed;
controlling the electric machine to apply on the driving shaft a first braking assistance torque for a determined time depending on the theoretical duration, on the theoretical final angular speed, and on the initial angular speed; and
controlling the electric machine to apply on the driving shaft a second assistance torque different from the first assistance torque until the end of the theoretical duration.

**2.** The method of claim 1, wherein the first braking assistance torque corresponds to the maximum power that can be received by the electric machine (13).

**3.** The method of claim 1, wherein the second assistance torque is null.

**4.** The method of claim 1, wherein the second assistance torque is equal to a positive torque for driving the driving shaft (14) corresponding to the maximum power that can be provided by the electric machine (13).

**5.** The method of claim 1, wherein one of the validation conditions is that the angular speed ($\omega_{MOT}$) of the driving shaft (14) is greater than a determined threshold.

**6.** The method of claim 5, wherein said threshold is different according to whether the angular speed ($\omega_{MOT}$) of the driving shaft (14) is increasing or decreasing.

**7.** The method of claim 1, wherein one of the validation conditions is that the acceleration of the vehicle (10) is greater than a determined acceleration.

**8.** The method of claim 1, wherein one of the validation conditions is that the fuel supply of the heat engine (11) is stopped.

**9.** A device for controlling an electric machine (13) equipping a series hybrid vehicle (10) comprising a heat engine (11) driving a driving shaft (14) connected to an input shaft (17) of a gearbox and a clutch (16) capable of disconnecting said driving shaft (14) from said input shaft (17) in a shifting of the gearbox from an initial reduction ratio to a final reduction ratio, said electric machine being coupled on the driving shaft and providing an assistance torque ($C_{ME}$) to said driving shaft, **characterized in that** it comprises means for determining the beginning of a switching from the initial ratio to a final ratio smaller than the initial ratio, means for determining a theoretical final angular speed ($\omega_{OBJ}$) of the driving shaft (14) according to the initial angular speed ($\omega_{INI}$) of the driving shaft (14) before the shifting and to the final reduction ratio, means for determining a theoretical shifting duration ($T_{MAX}$) according to the theoretical final angular speed and to the initial angular speed, and means for successively providing to the electric machine a first braking assistance torque reference value for a determined time depending on the theoretical duration, on the theoretical final angular speed, and on the initial angular speed, and a second assistance torque reference value until completion of the theoretical duration.

**Patentansprüche**

**1.** Verfahren zur Energiezurückgewinnung für ein serielles Hybridfahrzeug (10) bei einem Gangwechsel eines Getriebes von einer anfänglichen Untersetzung in eine Enduntersetzung, die kleiner als die anfängliche Untersetzung ist, wobei die Eingangswelle (17) des Getriebes von einer Antriebswelle (14) eines Verbrennungsmotors (11) angetrieben wird, wenn eine Untersetzung im Eingriff ist, und von der Antriebswelle während des Gangwechsels getrennt wird, wobei eine Elektromaschine (13) an der Antriebswelle angebunden wird und ein Hilfsmoment ($C_{ME}$) der Antriebswelle mitteilt, **dadurch gekennzeichnet, daß**:

überprüft wird, ob Freigabebedingungen erfüllt werden;
eine theoretische, finale Winkelgeschwindigkeit ($\omega_{OBJ}$) der Antriebswelle in Abhängigkeit von der anfänglichen Winkelgeschwindigkeit ($\omega_{INI}$) der Antriebswelle bestimmt wird, die vor dem Gangwechsel und der finalen Untersetzung bestand;
eine theoretische Gangwechsel-Dauer ($T_{MAX}$) in Abhängigkeit von der theoretischen, finalen Winkelgeschwindigkeit und von der anfänglichen Winkelgeschwindigkeit bestimmt wird; die Elektromaschine gesteuert wird, um der Antriebswelle ein erstes Bremshilfsmoment wäluend eines Zeitraums mitzuteilen, der abhängig von der theoretischen Dauer, der theoretischen, finalen Winkelgeschwindigkeit und der anfänglichen Winkelgeschwindigkeit bestimmt wird; und
die Elektromaschine gesteuert wird, um der Antriebswelle ein zweites Hilfsmoment, das von dem ersten Hilfsmoment unterschiedlich ist, bis nach Ablauf der theoretischen Dauer mitzuteilen.

**2.** Verfahren nach Anspruch 1, bei dem das erste Bremshilfsmoment der maximalen Leistung entspricht, die von der Elektromaschine (13) erreicht werden kann

**3.** Verfahren nach Anspruch 1, bei dem das zweite Hilfsmoment gleich null ist

**4.** Verfahren nach Anspruch 1, bei dem das zweite Hilfsmoment gleich einem positiven Antriebsmoment der Antriebswelle (14) entsprechend der maximalen Leistung ist, die durch die Elektromaschine (13) bereitgestellt werden kann

**5.** Verfahren nach Anspruch 1, bei dem eine der Freigabebedingungen **dadurch** festgelegt wird, daß die Winkelgeschwindigkeit ($\omega_{MOT}$) der Antriebswelle (14) größer als ein bestimmter Schwellenwert ist.

**6.** Verfahren nach Anspruch 5, bei dem die Schwelle unterschiedlich ist, je nachdem, ob die Winkelgeschwindigkeit ($\omega_{MOT}$) der Antriebswelle (14) zunimmt oder abnimmt.

**7.** Verfahren nach Anspruch 1, bei dem eine der Freigabebedingungen **dadurch** festgelegt wird, daß die Beschleunigung des Fahrzeugs (10) größer als eine bestimmte Beschleunigung ist

**8.** Verfahren nach Anspruch 1, bei dem eine der Freigabebedingungen **dadurch** festgelegt wird, daß die Kraftstoffversorgung des Verbrennungsmotors (11) unterbrochen wird

**9.** Vorrichtung zum Steuern einer Elektromaschine (13), mit der ein serielles Hybridfahrzeug (10) ausgestattet ist, das einen Verbrennungsmotor (11), der eine Antriebswelle (14) antreibt, die mit einer Eingangswelle (17) eines Getriebes verbunden ist, und eine Kupplung (16) umfaßt, die von der Antriebswelle (14) der Eingangswelle (17) bei einem Gangwechsel des Getriebes von einer anfänglichen Untersetzung zu einer finalen Untersetzung trennbar ist, wobei die Elektromaschine an der Antriebswelle angebunden ist und ein Hilfsmoment ($C_{ME}$) der Antriebswelle mitteilt, **gekennzeichnet durch** eine Einrichtung zum Bestimmen des Beginns eines Übergangs von der anfänglichen Untersetzung zu einer finalen Untersetzung, die kleiner als die anfängliche Untersetzung ist, eine Einrichtung zum Bestimmen einer theoretischen, finalen Winkelgeschwindigkeit ($\omega_{OBJ}$) der Antriebswelle (14) in Abhängigkeit von der anfänglichen Winkelgeschwindigkeit ($\omega_{INI}$) der Antriebswelle (14) vor dem Gangwechsel und von der finalen Untersetzung, eine Einrichtung zum Bestimmen einer theoretischen Gangwechsel-Dauer ($I_{MAX}$) in Abhängigkeit von der theoretischen, finalen Winkelgeschwindigkeit und von der anfänglichen Winkelgeschwindigkeit und eine Einrichtung zum sukzessiven Mitteilen eines ersten Bremshilfsmomentbetrags während eines bestimmten Zeitraums, der abhängig von der theoretischen Dauer, der theoretischen, finalen Winkelgeschwindigkeit und von dei anfänglichen Winkelgeschwindigkeit bestimmt ist, und eines zweiten Hilfsmomentbetrags an die Elektromaschine, bis die theoretische Dauer abgelaufen ist

Fig 1

Fig 2

Fig 3

Fig 4